# EUROPEAN PATENT APPLICATION

(11) **EP 4 614 819 A1**
(43) Date of publication of application: **10.09.2025**
(21) Application number: 23896187.4
(22) Date of filing: 08.09.2023
(51) Int. Cl.: H04B 1/401

(54) **RADIO FREQUENCY CIRCUIT, RADIO FREQUENCY MODULE, AND ELECTRONIC DEVICE**

(30) Priority: 28.11.2022 CN 202211501785
(71) Applicant: Honor Device Co., Ltd., Shenzhen, Guangdong 518040 (CN)
(72) Inventor: HUANG, Qinghua, Shenzhen, Guangdong 518040 (CN); LI, Zheng, Shenzhen, Guangdong 518040 (CN); SUN, Jiangtao, Shenzhen, Guangdong 518040 (CN); FENG, Baoxin, Shenzhen, Guangdong 518040 (CN)
(74) Representative: Gill Jennings & Every LLP
(86) International application number: PCT/CN2023/117815
(87) International publication number: WO 2024/114030

(57) **Abstract**

This application provides a radio frequency circuit, a radio frequency module, and an electronic device, relates to the field of radio frequencies, and can support ENDC of at least two low-frequency combinations. The radio frequency circuit includes a first transceiver link, a second transceiver link, a third transceiver link, and a fourth receive link. The first transceiver link and the second transceiver link are both connected to a first antenna. The third transceiver link and the fourth receive link are both connected to a second antenna. The first antenna and the second antenna are both low-frequency antennas. The first transceiver link is configured to: through the first antenna, transmit a first signal and perform primary receiving of the first signal. The second transceiver link is configured to: through the first antenna, transmit a third signal, perform primary receiving of the third signal, and perform diversity receiving of a second signal. The third transceiver link is configured to: through the second antenna, transmit the second signal, perform primary receiving of the second signal, and perform diversity receiving of the third signal. The fourth receive link is configured to perform diversity receiving of the first signal through the second antenna.

## Description

This application claims priority to Chinese Patent Application No. 202211501785.1, filed with the China National Intellectual Property Administration on November 28, 2022 and entitled "RADIO FREQUENCY CIRCUIT, RADIO FREQUENCY MODULE, AND ELECTRONIC DEVICE", which is incorporated herein by reference in its entirety.

### TECHNICAL FIELD

Embodiments of this application relate to the radio frequency field, and in particular, to a radio frequency circuit, a radio frequency module, and an electronic device.

### BACKGROUND

In the communication field, radio frequency signals may be roughly classified into a low-frequency signal, a medium-frequency signal, a medium-high-frequency signal, a high-frequency signal, and the like. A low frequency is a frequency band below 960 MHz, for example, B8 (880 MHz to 960 MHz), B5 (824 MHz to 894 MHz), B28 (703 MHz to 803 MHz), or B20 (791 MHz to 862 MHz).

In the foregoing frequency bands, three frequency bands: B20, B28, and B8, have an ENDC (E-UTRAN New Radio-Dual Connectivity, namely, 4G and 5G dual connectivity) requirement of combining every two. However, in a related technology, a radio frequency circuit usually can support ENDC of only one low-frequency combination.

Therefore, how to design a radio frequency circuit that can support ENDC of a plurality of low-frequency combinations becomes a problem to be urgently resolved.

### SUMMARY

This application provides a radio frequency circuit, a radio frequency module, and an electronic device, to support ENDC of at least two low-frequency combinations without increasing occupied space, and has high practicability.

To achieve the foregoing objectives, the following technical solutions are used in embodiments of this application.

According to a first aspect, a radio frequency circuit is provided, including: a first transceiver link, a second transceiver link, a third transceiver link, and a fourth receive link. The first transceiver link and the second transceiver link are both connected to a first antenna. The third transceiver link and the fourth receive link are both connected to a second antenna. The first antenna and the second antenna are both low-frequency antennas. The first transceiver link is configured to: through the first antenna, transmit a first signal and perform primary receiving of the first signal. The second transceiver link is configured to: through the first antenna, transmit a third signal, perform primary receiving of the third signal, and perform diversity receiving of a second signal. The first signal, the second signal, and the third signal are all low-frequency signals. Only a downlink frequency band of the second signal overlaps the third signal, and overlaps a downlink frequency band of the third signal. The first signal does not overlap the second signal and the third signal. A distance between an uplink frequency band of the first signal and an uplink frequency band of the second signal is less than a distance between the uplink frequency band of the first signal and an uplink frequency band of the third signal. The third transceiver link is configured to: through the second antenna, transmit the second signal, perform primary receiving of the second signal, and perform diversity receiving of the third signal. The fourth receive link is configured to perform diversity receiving of the first signal through the second antenna.

In a possible design, the first transceiver link includes a first duplexer and a first switch. The first duplexer is configured to filter an uplink signal and a downlink signal of the first signal. The uplink signal of the first signal is a signal in the uplink frequency band of the first signal, and the downlink signal of the first signal is a signal in a downlink frequency band of the first signal. The first duplexer is separately connected to a first port, a second port, and the first switch. The first switch is connected to the first antenna. The first port is an output port of the first signal, and the second port is a primary receiving port of the first signal. When the first switch connects the first duplexer to the first antenna, the uplink signal of the first signal is output from the first port and transmitted through the first antenna after sequentially passing through the first duplexer and the first switch. After being received by the first antenna, the downlink signal of the first signal sequentially passes through the first switch and the first duplexer, and the second port completes primary receiving.

In a possible design, the first duplexer includes a first filter and a second filter. A common port of the first filter and the second filter is connected to the first switch. The first filter is further connected to the first port. The second filter is further connected to the second port. A passband of the first filter is the uplink frequency band of the first signal. A passband of the second filter is the downlink frequency band of the first signal. When the first switch connects the first duplexer to the first antenna, the uplink signal of the first signal is output from the first port and transmitted through the first antenna after sequentially passing through the first filter and the first switch. After being received by the first antenna, the downlink signal of the first signal sequentially passes through the first switch and the second filter, and the second port completes primary receiving.

In a possible design, the fourth receive link includes a third filter and a second switch. The third filter is separately connected to the second switch and a third port. The second switch is connected to the second antenna. The third port is a diversity receiving port of the third signal. A passband of the third filter is the downlink frequency band of the third signal. When the second switch connects the third filter to the second antenna, after being received by the second antenna, a downlink signal of the third signal sequentially passes through the second switch and the third filter, and the third port completes diversity receiving. The downlink signal of the third signal is a signal in the downlink frequency band of the third signal.

In a possible design, the second transceiver link includes a second duplexer and a first switch. The second duplexer is configured to filter an uplink signal of the third signal, a downlink signal of the third signal, and a downlink signal of the second signal. The uplink signal of the third signal is a signal in the uplink frequency band of the third signal, the downlink signal of the third signal is a signal in the downlink frequency band of the third signal, and the downlink signal of the second signal is a signal in the downlink frequency band of the second signal. The second duplexer is separately connected to a fourth port, a fifth port, and the first switch. The first switch is connected to the first antenna. The fourth port is an output port of the third signal, and the fifth port is a primary receiving port of the third signal and a diversity receiving port of the second signal. When the first switch connects the second duplexer to the first antenna, the uplink signal of the third signal is output from the fourth port and transmitted through the first antenna after sequentially passing through the second duplexer and the first switch. After being received by the first antenna, the downlink signal of the third signal sequentially passes through the first switch and the second duplexer, and the fifth port completes primary receiving. After being received by the first antenna, the downlink signal of the second signal sequentially passes through the first switch and the second duplexer, and the fifth port completes diversity receiving.

In a possible design, the second duplexer includes a fourth filter and a fifth filter. A common port of the fourth filter and the fifth filter is connected to the first switch. The fourth filter is further connected to the fourth port. The fifth filter is further connected to the fifth port. A passband of the fourth filter is the uplink frequency band of the third signal. A passband of the fifth filter is the downlink frequency band of the third signal and the downlink frequency band of the second signal. When the first switch connects the second duplexer to the first antenna, the uplink signal of the third signal is output from the fourth port and transmitted through the first antenna after sequentially passing through the fourth filter and the first switch. After being received by the first antenna, the downlink signal of the third signal sequentially passes through the first switch and the fifth filter, and the fifth port completes primary receiving. After being received by the first antenna, the downlink signal of the second signal sequentially passes through the first switch and the fifth filter, and the fifth port completes diversity receiving.

In a possible design, the third transceiver link includes a third duplexer and a second switch. The third duplexer is configured to filter an uplink signal of the second signal, a downlink signal of the second signal, and a downlink signal of the third signal. The uplink signal of the second signal is a signal in the uplink frequency band of the second signal, the downlink signal of the second signal is a signal in the downlink frequency band of the second signal, and the downlink signal of the third signal is a signal in the downlink frequency band of the third signal. The third duplexer is separately connected to a sixth port, a seventh port, and the second switch. The second switch is connected to the second antenna. The sixth port is an output port of the second signal, and the seventh port is a primary receiving port of the second signal and a diversity receiving port of the third signal. When the second switch connects the third duplexer to the second antenna, the uplink signal of the second signal is output from the sixth port and transmitted through the second antenna after sequentially passing through the third duplexer and the second switch. After being received by the second antenna, the downlink signal of the second signal sequentially passes through the second switch and the third duplexer, and the seventh port completes primary receiving. After being received by the second antenna, the downlink signal of the third signal sequentially passes through the second switch and the third duplexer, and the seventh port completes diversity receiving.

In a possible design, the third duplexer includes a sixth filter and a seventh filter. A common port of the sixth filter and the seventh filter is connected to the second switch. The sixth filter is further connected to the sixth port. The seventh filter is further connected to the seventh port. A passband of the sixth filter is the uplink frequency band of the second signal. A passband of the seventh filter is the downlink frequency band of the second signal and the downlink frequency band of the third signal. When the second switch connects the third duplexer to the second antenna, the uplink signal of the second signal is output from the sixth port and transmitted through the second antenna after sequentially passing through the sixth filter and the second switch. After being received by the second antenna, the downlink signal of the second signal sequentially passes through the second switch and the seventh filter, and the seventh port completes primary receiving. After being received by the second antenna, the downlink signal of the third signal sequentially passes through the second switch and the seventh filter, and the seventh port completes diversity receiving.

In a possible design, when ENDC is performed on the first signal and the second signal, the first transceiver link, the second transceiver link, the third transceiver link, and the fourth receive link are all connected. When ENDC is performed on the second signal and the third signal, the second transceiver link and the third transceiver link are connected, and the first transceiver link and the fourth receive link are disconnected.

In a possible design, the radio frequency module further includes: a fifth receive link and a sixth transceiver link. The fifth receive link is connected to the first antenna. The sixth transceiver link is connected to the second antenna. The fifth receive link is configured to perform diversity receiving of a fourth signal through the first antenna. The sixth transceiver link is configured to: through the second antenna, transmit the fourth signal and perform primary receiving of the fourth signal. The fourth signal does not overlap the third signal.

In a possible design, the fifth receive link includes an eighth filter and a first switch. The eighth filter is separately connected to the first switch and an eighth port. The first switch is further connected to the first antenna. The eighth port is a diversity receiving port of the fourth signal. A passband of the eighth filter is a downlink frequency band of the fourth signal. When the first switch connects the eighth filter to the first antenna, after being received by the first antenna, a downlink signal of the fourth signal sequentially passes through the first switch and the eighth filter, and the eighth port completes diversity receiving. The downlink signal of the fourth signal is a signal in the downlink frequency band of the fourth signal.

In a possible design, the sixth transceiver link includes a fourth duplexer and a second switch. The fourth duplexer is configured to filter an uplink signal of the fourth signal and a downlink signal of the fourth signal. The uplink signal of the fourth signal is a signal in an uplink frequency band of the fourth signal, and the downlink signal of the fourth signal is a signal in a downlink frequency band of the fourth signal. The fourth duplexer is separately connected to a ninth port, a tenth port, and the second switch. The second switch is connected to the second antenna. The ninth port is an output port of the fourth signal, and the tenth port is a primary receiving port of the fourth signal. When the second switch connects the fourth duplexer to the second antenna, the uplink signal of the fourth signal is output from the ninth port and transmitted through the second antenna after sequentially passing through the fourth duplexer and the second switch. The downlink signal of the fourth signal is received by the second antenna, and sequentially passes through the second switch and the fourth duplexer, and the tenth port completes primary receiving.

In a possible design, the fourth duplexer includes a ninth filter and a tenth filter. A common port of the ninth filter and the tenth filter is connected to the second switch. The ninth filter is further connected to the ninth port. The tenth filter is further connected to the tenth port. A passband of the ninth filter is the uplink frequency band of the fourth signal. A passband of the tenth filter is the downlink frequency band of the fourth signal. When the second switch connects the fourth duplexer to the second antenna, the uplink signal of the fourth signal is output from the ninth port and transmitted through the second antenna after sequentially passing through the ninth filter and the second switch. The downlink signal of the fourth signal is received by the second antenna, and sequentially passes through the second switch and the tenth filter, and the tenth port completes primary receiving.

According to a second aspect, a radio frequency module is provided. The radio frequency module includes: the radio frequency circuit according to any design of the first aspect, a first antenna, a second antenna, a signal output module, and a signal receiving module. The first transceiver link and the second transceiver link in the radio frequency circuit are both connected to the first antenna. The third transceiver link and the fourth receive link in the radio frequency circuit are both connected to the second antenna. The signal output module is separately connected to the first transceiver link, the second transceiver link, and the third transceiver link. The signal output module is configured to output a low-frequency signal, where the low-frequency signal includes at least a first signal, a second signal, and a third signal. The signal receiving module is separately connected to the first transceiver link, the second transceiver link, the third transceiver link, and the fourth receive link. The signal receiving module is configured to receive the low-frequency signal.

In a possible design, the radio frequency module further includes a third switch. The signal output module is connected to the radio frequency circuit through the third switch. The third switch is configured to: when ENDC is performed on the first signal and the second signal, connect the signal output module to the first transceiver link and the third transceiver link, and disconnect a connection between the signal output module and the second transceiver link. The third switch is further configured to: when ENDC is performed on the second signal and the third signal, connect the signal output module to the second transceiver link and the third transceiver link, and disconnect a connection between the signal output module and the first transceiver link.

According to a third aspect, an electronic device is provided. The electronic device includes the radio frequency circuit according to any design of the first aspect or the radio frequency module according to any design of the second aspect.

It is to be understood that the technical features of the technical solution provided in the second aspect and the third aspect above can all correspond to the radio frequency circuit provided in the first aspect and any possible design of the first aspect, so that the similar beneficial effects can be achieved. Details are not described herein again.

### BRIEF DESCRIPTION OF DRAWINGS

FIG. 1 is a schematic diagram of a low-frequency band;
FIG. 2 is a schematic diagram of a radio frequency circuit;
FIG. 3 is a schematic diagram of another radio frequency circuit;
FIG. 4 is a schematic diagram of a structure of an electronic device according to an embodiment of this application;
FIG. 5 is a schematic diagram of a relationship between a first signal, a second signal, and a third signal according to an embodiment of the present application;
FIG. 6 is a schematic diagram of a radio frequency circuit according to an embodiment of this application;
FIG. 7 is a schematic diagram of another radio frequency circuit according to an embodiment of this application;
FIG. 8 is a schematic working diagram of a radio frequency circuit according to an embodiment of this application;
FIG. 9 is another schematic working diagram of a radio frequency circuit according to an embodiment of this application;
FIG. 10 is another schematic working diagram of a radio frequency circuit according to an embodiment of this application;
FIG. 11 is a schematic diagram of another radio frequency circuit according to an embodiment of this application;
FIG. 12 is a schematic diagram of another radio frequency circuit according to an embodiment of this application;
FIG. 13 is a schematic working diagram of another radio frequency circuit according to an embodiment of this application;
FIG. 14 is a schematic diagram of another radio frequency circuit according to an embodiment of this application; and
FIG. 15 is a schematic diagram of a radio frequency module according to an embodiment of this application.

### DESCRIPTION OF EMBODIMENTS

In embodiments of this application, the terms "first", "second", "third", and the like are intended to distinguish between different objects but do not indicate a particular order. In addition, the word "in an example" or "for example" indicates giving an example, an illustration, or a description. Any embodiment or design scheme described as "in an example" or "for example" in embodiments of this application should not be explained as being more preferred or having more advantages than another embodiment or design scheme. Exactly, use of the term "example", "for example", or the like is intended to present a related concept in a specific manner.

For ease of understanding embodiments of this application, some concepts or terms are briefly explained below.

TX: With a full name being Transmit, TX is an uplink frequency band of a radio frequency signal. In embodiments of this application, TX in a frequency band z is referred to as zTX. The frequency band z is any frequency band. For example, TX in B28 may be referred to as B28TX.

RX: With a full name being Receive, RX is a downlink frequency band of a radio frequency signal. In embodiments of this application, RX in a frequency band z is referred to as zRX. For example, RX in B28 may be referred to as B28RX.

In embodiments of this application, a signal in an uplink frequency band of a radio frequency signal may be referred to as an uplink signal of the radio frequency signal, and a signal in a downlink frequency band of the radio frequency signal may be referred to as a downlink signal of the radio frequency signal. For example, B28TX may be referred to as an uplink signal of B28, and B28RX may be referred to as a downlink signal of B28.

B28L: Due to a wide frequency coverage range, a B28 frequency band is usually divided into two frequency bands: L and H, and a frequency band with a lower frequency is referred to as B28L. B28LTX, namely, an uplink frequency band of B28L, is 703 MHz to 733 MHz. B28LRX is 758 MHz to 788 MH.

B28H: Due to a wide frequency coverage range, a B28 frequency band is usually divided into two frequency bands: L and H, and a frequency band with a higher frequency is referred to as B28H. B28HTX is 718 MHz to 748 MHz. B28HRX is 773 MHz to 803 MHz.

ENDC: With a full name of E-UTRAN New Radio-Dual Connectivity, ENDC refers to 4G and 5G dual connectivity. A 4G frequency band starts with a letter B, and a 5G frequency band starts with a letter N. For example, ENDC of B20+N28 means that B20 in a 4G frequency band and N28 in a 5G frequency band are simultaneously connected, and simultaneously work.

It should be noted that, when numbers after the letter of the 4G frequency band and the letter of the 5G frequency band are the same, covered frequency ranges are also the same. For example, frequency ranges covered by B28 and N28 are the same. Therefore, a radio frequency module can implement ENDC of B20+N28, which is equivalent to that the radio frequency module can implement ENDC of B28+N20. Details are not described subsequently again.

Filter: The filter may pass a particular frequency component in a signal, and greatly attenuate another frequency component. In addition to a filter circuit including a capacitor and an inductor, there is also an acoustic filter. The acoustic filter herein may be a surface acoustic wave (Surface Acoustic Wave, SAW) or a bulk acoustic wave (Bulk Acoustic Wave, BAW). Compared with the filter including a capacitor and an inductor, the acoustic filter has a higher Q value and better selectivity, and is usually used for a TX+RX duplexer in an FDD (Frequency Division Duplexing, frequency division duplexing) frequency band and a filter in a TDD (Time Division Duplex, frequency division duplexing) frequency band. It should be noted that, there is usually a transition band between a passband and a stopband of a filter. Therefore, two filters that are not carefully designed and that have close passbands cannot be simultaneously connected to an antenna switch for double turning-on Otherwise, in-band performance is greatly affected. For example, a passband of a filter is B20TX, namely, 832 MHz to 862 MHz. A passband of another filter is B8TX, namely, 880 MHz to 915 MHz. A difference between the passbands of the two filters is 18 MHz. Therefore, the two filters cannot be simultaneously connected to the antenna switch for double turning-on. Otherwise, performance of the filters in the passbands is greatly affected.

Duplexer: The duplexer may be considered as a combination of two transceiver filters, where a common node (antenna) is shared, and is configured to simultaneously receive and transmit radio frequency signals. The design of the duplexer can ensure that a passband of each filter is not loaded with the other filter. In addition, a transmit signal output by a receive filter may be significantly attenuated. In other words, a carefully designed duplexer has high receiving and sending isolation. Therefore, passbands of the two filters forming the duplexer may be close. For example, a passband of one filter in the duplexer may be B28TX, namely, 703 MHz to 748 MHz. A passband of the other filter may be B28RX, namely, 758 MHz to 803 MHz. A difference between passbands of the two filters is 10 MHz, but in the duplexer, it can be ensured that the two filters work simultaneously and do not affect each other.

Low frequency: The low frequency refers to a frequency below 960 MHz. Commonly used low-frequency bands include B28, B20, B26, B5, B8, and the like.

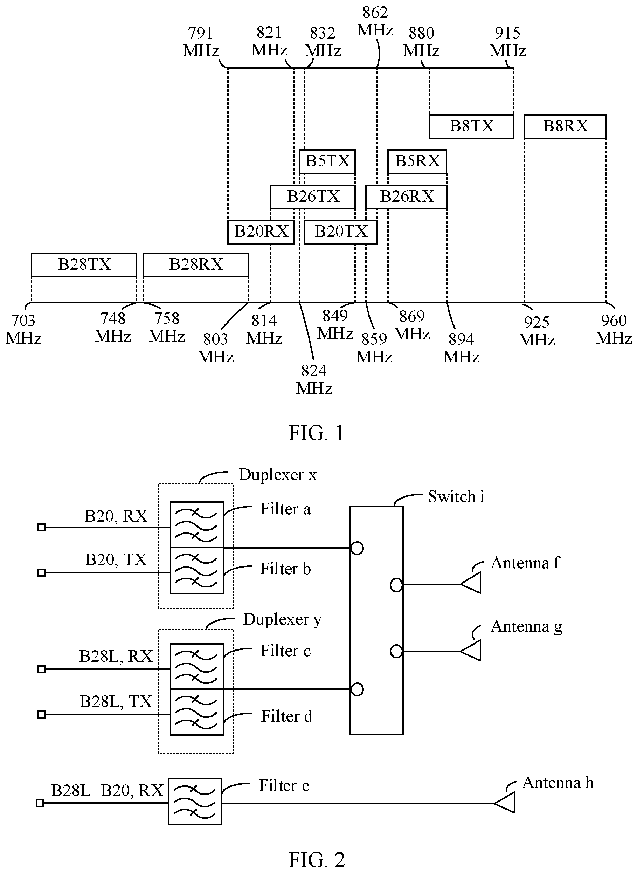

FIG. 1 is a schematic diagram of a low-frequency band. As shown in FIG. 1. B28TX is 703 MHz to 748 MHz; B28RX is 758 MHz to 803 MHz; B20RX is 791 MHz to 821 MHz; B20TX is 832 MHz to 862 MHz; B26TX is 814 MHz to 849 MHz; B26RX is 859 MHz to 894 MHz; B5TX is 824 MHz to 849 MHz; B5RX is 869 MHz to 894 MHz; B8TX is 880 MHz to 915 MHz; and B8RX is 925 MHz to 960 MHz.

Based on the foregoing explanations about the concepts or terms, the following describes an application background of embodiments of this application.

With the pursuit of miniaturization and lightweight of terminal devices, space arrangements in the terminal devices are increasingly compact. Because a size of a low-frequency antenna is large, only two antennas are usually disposed in the terminal device. Increasing to three low-frequency antennas compromises performance and sacrifices other space. Increasing to four low-frequency antennas further increases space design difficulty.

For example, the following describes a radio frequency circuit. The radio frequency circuit may implement ENDC of B20+N28L or ENDC of B28L+N20 by receiving and sending signals through three low-frequency antennas.

FIG. 2 is a schematic diagram of a radio frequency circuit. As shown in FIG. 2, the radio frequency circuit includes a duplexer x, a duplexer y, a filter e, and a switch i. The duplexer x includes a filter a and a filter b. The duplexer y includes a filter c and a filter d. The duplexer x and the duplexer y are separately connected to the switch i. The switch i is further connected to an antenna f and an antenna g. The filter e is connected to an antenna h.

The filter a is further connected to a primary receiving port of B20. The filter b is further connected to a sending port of B20. The filter c is further connected to a primary receiving port of B28L. The filter d is further connected to a sending port of B28L. The filter e is further connected to a diversity receiving port of B28L+B20. The primary receiving port of B20 is configured to perform primary receiving of a B20RX signal. The sending port of B20 is configured to send a B20TX signal. The primary receiving port of B28L is configured to perform primary receiving of a B28LRX signal. The sending port of B28L is configured to send a B28LTX signal. The diversity receiving port of B28L+B20 is configured to perform diversity receiving of the B28LRX signal and the B20RX signal.

A passband of the filter a is B20RX. A passband of the filter b is B20TX. A passband of the filter c is B28LRX. A passband of the filter d is B28LTX. Passbands of the filter e are B28LRX and B20RX, and therefore, the filter e is a broadband filter.

When the radio frequency circuit works, the switch i connects the duplexer x to the antenna f, and connects the duplexer y to the antenna g. A primary receiving path of the B20RX signal is: the antenna f, the switch i, the filter a, and the primary receiving port of B20. A diversity receiving path of the B20RX signal is: the antenna h, the filter e, and the diversity receiving port of B28L+B20. A transmit path of the B20TX signal is: the sending port of B20, the filter b, the switch i, and the antenna f. A primary receiving path of the B28LRX signal is: the antenna g, the switch i, the filter c, and the primary receiving port of B28L. A diversity receiving path of the B28LRX signal is: the antenna h, the filter e, and the diversity receiving port of B28L+B20. A transmit path of the B28LTX signal is: the sending port of B28L, the filter d, the switch i, and the antenna g.

It should be noted that, a connection relationship between the duplexer and the antenna herein is merely an example for description. In some embodiments, the switch i may alternatively work in a cross state, that is, the duplexer x is connected to the antenna g, and the duplexer y is connected to the antenna f. Details are not described subsequently again.

It can be learned that, in the radio frequency circuit shown in FIG. 2, the duplexer x and the duplexer y are double turned on, to implement transmission and primary receiving of B20 and transmission and primary receiving of B28L. It should be noted that, double turning-on herein means that two paths simultaneously work, but are connected to different antennas, namely, the antenna f and the antenna g. In addition, a feature that B20RX and B28RX overlap is used, and the broadband filter e whose passbands are B28LRX and B20RX and the antenna h are used to perform diversity receiving of B20 and B28L, to implement ENDC of B20+N28L or ENDC of B28L+N20.

However, although the radio frequency circuit shown in FIG. 2 can implement ENDC of B20+N28L or ENDC of B28L+N20, a new low-frequency antenna (the antenna h) needs to be introduced. This may further compress space that is originally tense inside a terminal device. In addition, the radio frequency circuit shown in FIG. 2 only supports ENDC of B20+N28L or ENDC of B28L+N20, cannot support ENDC between other low-frequency bands, and has a monotonous function. ENDC between other low-frequency bands cannot be implemented by using a principle similar to that of the radio frequency circuit shown in FIG. 2. Details are described below.

A reason why the radio frequency circuit shown in FIG. 2 can use the B28LRX+B20RX filter is that a frequency difference between B28LRX (758 MHz to 788 MHz) and B20RX (791 MHz to 821 MHz) is small, and a bandwidth is 63 MHz (758 MHz to 821 MHz), which is also narrow. Therefore, the filter is easy to be implemented.

However, for two low-frequency bands whose frequencies have a large difference and a bandwidth is wide, because a feasibility range of a surface acoustic wave (Surface Acoustic Wave, SAW) filter is limited, it is difficult to implement a filter that meets requirements.

For example, if ENDC of B8+N20 or ENDC of B20+N8 needs to be implemented by using a principle similar to that of the radio frequency circuit shown in FIG. 2, a B20RX+B8RX filter is needed. However, a frequency difference between B20RX (791 MHz to 821 MHz) and B8RX (925 MHz to 960 MHz) is 104 MHz, and a bandwidth is 169 MHz. These exceed the feasibility range of the SAW filter. In other words, it is difficult to implement a filter of such specification. Therefore, the principle similar to that of the radio frequency circuit shown in FIG. 2 cannot be used, and ENDC of B8+N20 or ENDC of B20+N8 cannot be implemented by using the B20RX+B8RX filter.

A duplexer including a B8RX filter and a B8TX filter cannot be added to the radio frequency circuit to implement double turning-on with the duplexer x. This is because a difference between B8TX and B20TX is 18 MHz, and double turning-on through the switch affects in-band performance of the B8TX filter and the B20TX filter.

To reduce space occupied by a radio frequency circuit and save space resources inside a terminal device, a radio frequency circuit is further provided in a related technology. The radio frequency circuit may implement ENDC of B20+N28L or ENDC of B28L+N20 through two low-frequency antennas.

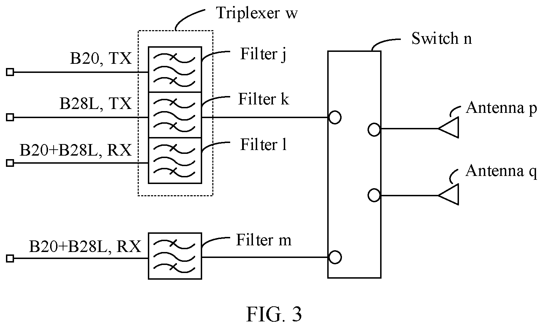

FIG. 3 is a schematic diagram of another radio frequency circuit. As shown in FIG. 3, the radio frequency circuit includes a triplexer w, a filter m, and a switch n. The triplexer w includes a filter j, a filter k, and a filter 1. The triplexer w is connected to the switch n. The filter j is connected to a sending port of B20. The filter k is connected to a sending port of B28L. The filter 1 is connected to a primary receiving port of B20+B28L. One end of the filter m is connected to a diversity receiving port of B20+B28L, and the other end of the filter m is connected to the switch n. The switch n is further connected to an antenna p and an antenna q.

The sending port of B20 is configured to send a B20TX signal. The sending port of B28L is configured to send a B28LTX signal. The primary receiving port of B28L+B20 is configured to perform primary receiving of the B28LRX signal and the B20RX signal. The diversity receiving port of B28L+B20 is configured to perform diversity receiving of the B28LRX signal and the B20RX signal.

A passband of the filter j is B20TX. A passband of the filter k is B28LTX. Passbands of the filter 1 and the filter m are B28LRX and B20RX.

When the radio frequency circuit shown in FIG. 3 works, the switch n connects the triplexer w to the antenna p, and connects the filter m to the antenna q. A transmit path of the B20TX signal is: the sending port of B20, the filter j, the switch n, and the antenna p. A primary receiving path of the B20RX signal is: the antenna p, the switch n, the filter 1, and the primary receiving port of B28L+B20. A transmit path of the B28LTX signal is: the sending port of B28L, the filter k, the switch n, and the antenna p. A receive path of B28LRX is: the antenna p, the switch n, the filter 1, and the primary receiving port of B28L+B20. A diversity receiving path of B20RX and a diversity receiving path of B28LRX are both: the antenna q, the switch n, the filter m, and the diversity receiving port of B28L+B20.

It should be understood that a connection relationship between the triplexer w, the filter m, the antenna q, and the antenna p may also be that the switch n connects the triplexer w to the antenna q and connects the filter m to the antenna p.

It can be learned that, in the radio frequency circuit shown in FIG. 3, the triplexer w implements transmission and primary receiving of B20 and transmission and primary receiving of B28L, and transmission and primary receiving of B20 and transmission and primary receiving of B28L are all completed through the antenna p. The antenna q cooperates with another B20+B28L RX filter (the filter m) to implement diversity receiving of B20 and B28L. In this way, ENDC of B20+N28L or ENDC of B28L+N20 is implemented.

The radio frequency circuit shown in FIG. 3 can implement ENDC of B20+N28L or ENDC of B28L+N20 through two existing low-frequency antennas in the terminal device, without introducing an additional low-frequency antenna.

However, for the same reason as the filter shown in FIG. 2, because it is difficult to implement a filter with a specification of B20RX+B8RX, the B20RX+B28LRX filter cannot be replaced with a B20RX+B8RX filter to implement ENDC of B20+N8 ENDC or ENDC of B8+N20.

A duplexer including a B8RX filter and a B8TX filter cannot be added to the radio frequency circuit to implement double turning-on with the triplexer w. This is because a difference between B8TX and B20TX is 18 MHz, and double turning-on through the switch affects in-band performance of the B8TX filter and the B20TX filter.

In other words, the radio frequency circuit in the related technology can implement only ENDC of B20+N28L or B28L+N20 and cannot implement ENDC of other low-frequency bands such as B8+N20 or B20+N8 on the premise that two low-frequency antennas are used.

Therefore, embodiments of this application provide a radio frequency circuit, a radio frequency module, and an electronic device, to implement ENDC of at least two low-frequency combinations through two low-frequency antennas, and have high practicability.

The radio frequency circuit and the radio frequency module provided in embodiments of this application may be used in the electronic device. The electronic device may refer to a device provided with a low-frequency antenna, a radio frequency circuit, and a radio frequency module, for example, a mobile phone, a tablet computer, a wearable device (for example, a smart watch), a vehicle-mounted device, a laptop (Laptop), and a desktop computer. An example of an embodiment of the electronic device includes but is not limited to a portable terminal carrying an iOS^{®}, an Android^{®}, a Microsoft^{®}, or another operating system.

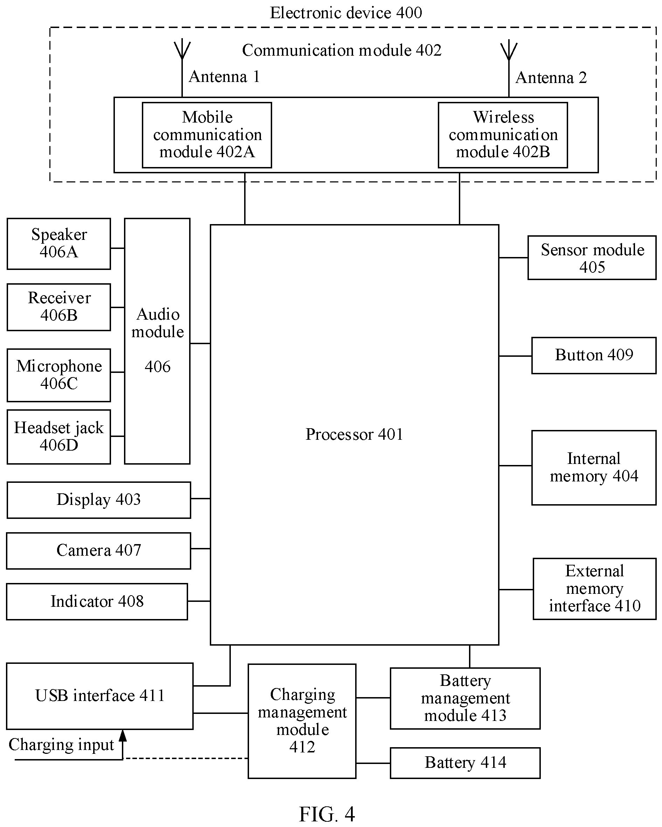

In an example, FIG. 4 is a schematic diagram of a structure of an electronic device 400 according to an embodiment of this application.

As shown in FIG. 4, the electronic device 400 may include a processor 401, a communication module 402, a display 403, and the like.

The processor 401 may include one or more processing units. For example, the processor 401 may include an application processor (application processor, AP), a modem processor, a graphics processing unit (graphics processing unit, GPU), an image signal processor (image signal processor, ISP), a controller, a memory, a video stream codec, a digital signal processor (digital signal processor, DSP), a baseband processor, and/or a neural-network processing unit (neural-network processing unit, NPU). Different processing units may be independent devices, or may be integrated into one or more processors 401.

The controller may be a nerve center and a command center of the electronic device 400. The controller may generate an operation control signal based on instruction operation code and a timing signal, and implement control on instruction fetching and instruction execution.

The processor 401 may further be provided with a memory. The memory is configured to store instructions and data. In some embodiments, the memory in the processor 401 is a cache. The memory may store instructions or data recently used or cyclically used by the processor 401. If the processor 401 needs to use the instructions or the data again, the processor may directly invoke the instructions or the data from the memory. This avoids repeated access, and reduces a waiting time of the processor 401, and therefore improves system efficiency.

In some embodiments, the processor 401 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface 411, and/or the like.

The electronic device 400 may implement a display function through the GPU, the display 403, the application processor 401, and the like. The GPU is a microprocessor for image processing and connects the display 403 and the application processor. The GPU is configured to: perform mathematical and geometric calculations, and render graphics. The processor 401 may include one or more GPUs, which execute program instructions to generate or change displayed information.

The display 403 is configured to display an image, a video stream, and the like.

The communication module 402 may include an antenna 1, an antenna 2, a mobile communication module 402A, and/or a wireless communication module 402B. For example, the communication module 402 includes the antenna 1, the antenna 2, the mobile communication module 402A, and the wireless communication module 402B.

In addition, the radio frequency circuit and the radio frequency module provided in embodiments of this application may also be disposed in the communication module 402.

A wireless communication function of the electronic device 400 may be implemented by using the antenna 1, the antenna 2, the mobile communication module 402A, the wireless communication module 402B, the modem processor, the baseband processor, and the like.

The antenna 1 and the antenna 2 are configured to transmit and receive an electromagnetic wave signal. Each antenna of the electronic device 400 may be configured to cover one or more communication bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 402A may provide a wireless communication solution that is applied to the electronic device 400 and that includes 2G/3G/4G/5G. The mobile communication module 402A may include at least one filter, a switch, a power amplifier, a low noise amplifier (low noise amplifier, LNA), and the like. The mobile communication module 402A may receive an electromagnetic wave through the antenna 1, perform processing such as filtering and amplification on the received electromagnetic wave, and transmit the processed electromagnetic wave to the modem processor for demodulation. The mobile communication module 402A may further amplify a signal modulated by the modem processor, and convert an amplified signal into an electromagnetic wave for radiation through the antenna 1. In some embodiments, at least some functional modules of the mobile communication module 402A may be disposed in the processor 401. In some embodiments, at least some functional modules of the mobile communication module 402A and at least some modules of the processor 401 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to a speaker 406A, a phone receiver 406B, or the like), or displays an image or a video stream through the display 403. In some embodiments, the modem processor may be an independent device. In some other embodiments, the modem processor may be independent of the processor 401, and is disposed in a same device as the mobile communication module 402A or another functional module.

The wireless communication module 402B can provide a solution for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology and the like to be applied to the electronic device 400. The wireless communication module 402B may be one or more components integrating at least one communication processing module. The wireless communication module 402B receives an electromagnetic wave through the antenna 2, performs frequency modulation and filtering processing on the electromagnetic wave signal, and transmits a processed signal to the processor 401. The wireless communication module 402B may further receive a to-be-transmitted signal from the processor 401, perform frequency modulation and amplification on the to-be-transmitted signal, and convert the to-be-transmitted signal into an electromagnetic wave through the antenna 2 for radiation.

In some embodiments, in the electronic device 400, the antenna 1 and the mobile communication module 402A are coupled, and the antenna 2 and the wireless communication module 402B are coupled, so that the electronic device 400 can communicate with a network and another device by using a wireless communication technology. The wireless communication technology may include a global system for mobile communications (global system for mobile communications, GSM), a general packet radio service (general packet radio service, GPRS), code-division multiple access (code-division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

In this embodiment of this application, the communication module 402 may include a radio frequency module. The radio frequency module includes the antenna 1 and the antenna 2. In other words, the antenna 1 and the antenna 2 may be low-frequency antennas.

As shown in FIG. 4, in some implementations, the electronic device 400 may further include an external memory interface 410, an internal memory 404, a universal serial bus (universal serial bus, USB) interface 411, a charging management module 412, a power management module 413, a battery 414, an audio module 406, a speaker 406A, a phone receiver 406B, a microphone 406C, a headset jack 406D, a sensor module 405, a button 409, a motor, an indicator 408, a camera 407, a subscriber identification module (subscriber identification module, SIM) card interface, and the like.

The charging management module 412 is configured to receive a charging input from the charger. The charger may be a wireless charger or a wired charger. In some embodiments of wired charging, the charging management module 412 may receive a charging input from the wired charger through the USB interface 411. In some embodiments of wireless charging, the charging management module 412 may receive wireless charging input through a wireless charging coil of the electronic device 400. When charging the battery 414, the charging management module 412 may further supply power to the electronic device 400 through the power management module 413.

The power management module 413 is configured to connect the battery 414, the charging management module 412, and the processor 401. The power management module 413 receives an input from the battery 414 and/or the charging management module 412, and supplies power to the processor 401, the internal memory 404, an external memory, the display 403, the camera 407, the wireless communication module 402B, and the like. The power management module 413 may be further configured to monitor parameters such as a capacity of the battery 414, a cycle count of the battery 414, and a state of health (leakage and impedance) of the battery 414. In some other embodiments, the power management module 413 may alternatively be disposed in the processor 401. In some other embodiments, the power management module 413 and the charging management module 412 may be arranged in a same device.

The external memory interface 410 may be used to connect to an external memory card, for example, a Micro SD card, to extend a storage capability of the electronic device 400. The external memory card communicates with the processor 401 through the external memory interface 410, to implement a data storage function. For example, files such as music and a video stream are stored in the external memory card.

The internal memory 404 may be configured to store computer-executable program code. The executable program code includes instructions. The processor 401 runs the instructions stored in the internal memory 404, to perform various function applications and data processing of the electronic device 400.

The electronic device 400 may implement an audio function, for example, music playing or recording, through the audio module 406, the speaker 406A, the receiver 406B, the microphone 406C, the headset jack 406D, the application processor 401, and the like.

The button 409 includes a power button, a volume button, and the like. The button 409 may be a mechanical button 409 or a touch button 409. The electronic device 400 may receive an input of the button 409, and generate a button signal input related to user setting and function control of the electronic device 400.

The indicator 408 may be an indicator light, and may be configured to indicate a charging state or a power change, or may be configured to indicate a message, a missed call, a notification, and the like.

The SIM card interface is configured to connect a SIM card. The SIM card may be inserted into the SIM card interface or unplugged from the SIM card interface, to be in contact with or be separated from the electronic device 400. The electronic device 400 may support 1 or N SIM card interfaces, where N is a positive integer greater than 1. The SIM card interface may support a Nano SIM card, a Micro SIM card, a SIM card, and the like. A plurality of cards may be inserted into a same SIM card interface at the same time. The plurality of cards may be of a same type or different types. The SIM card interface may further be compatible with different types of SIM cards. The SIM card interface may also be compatible with an external memory card. The electronic device 400 interacts with a network through a SIM card, to implement functions such as conversation and data communication. In some embodiments, the electronic device 400 uses an eSIM, namely, an embedded SIM card. The eSIM card may be embedded in the electronic device 400, and cannot be separated from the electronic device 400.

The sensor module 405 in the electronic device 400 may include components such as a touch sensor, a pressure sensor, a gyro sensor, a barometric pressure sensor, a magnetic sensor, an acceleration sensor, a distance sensor, an optical proximity sensor, an ambient light sensor, a fingerprint sensor, a temperature sensor, or a bone conduction sensor, to implement a sensing and/or obtaining function for different signals.

The electronic device in which the radio frequency circuit and the radio frequency module are used according to embodiments of this application is described above. It should be understood that an example structure in this embodiment does not constitute a specific limitation on the electronic device 400. In some other embodiments, the electronic device 400 may include more or fewer components than those shown in the figure, some components may be combined, some components may be split, or different component arrangements may be used. The components shown in the figure may be implemented by hardware, software, or a combination of software and hardware.

The following describes the radio frequency circuit provided in embodiments of this application.

The radio frequency circuit provided in this embodiment of this application is configured to implement ENDC of at least two low-frequency combinations through a first antenna and a second antenna. The first antenna and the second antenna are both low-frequency antennas.

It should be understood that a working frequency of an antenna is determined by a size of the antenna. A high-frequency antenna has a small size, and a low-frequency antenna has a large size. Internal space of a terminal device is limited, and only two low-frequency antennas are usually allowed to be disposed at most. Under this limitation, embodiments of this application provide a radio frequency circuit and a radio frequency module, to implement ENDC of at least two low-frequency combinations through two low-frequency antennas.

For example, the radio frequency circuit provided in this embodiment of this application may implement ENDC of a first signal and a second signal and ENDC of the second signal and a third signal through the first antenna and the second antenna. The first signal, the second signal, and the third signal are all low-frequency signals, that is, frequencies are all less than 960 MHz.

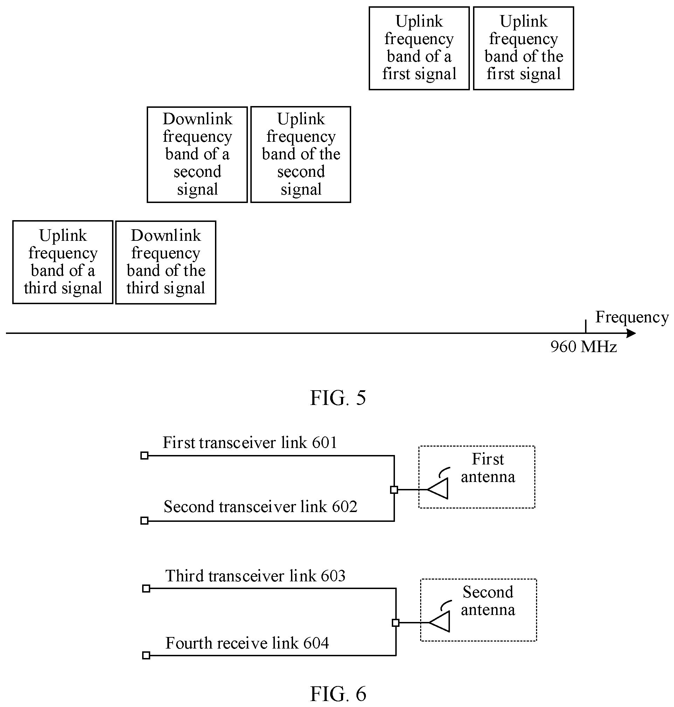

In this embodiment of this application, the first signal, the second signal, and the third signal need to meet a specific relationship, which is described below in FIG. 5.

FIG. 5 is a schematic diagram of a relationship between the first signal, the second signal, and the third signal according to an embodiment of the present application. As shown in FIG. 5, only a downlink frequency band of the second signal overlaps the third signal, and overlaps a downlink frequency band of the third signal. The first signal does not overlap the second signal and the third signal. A distance between an uplink frequency band of the first signal and an uplink frequency band of the second signal is less than a distance between the uplink frequency band of the first signal and an uplink frequency band of the third signal.

In some embodiments, the first signal may be greater than the second signal and the third signal, as shown in FIG. 5. In some other embodiments, the first signal may alternatively be smaller than the second signal and the third signal.

In an example, the first signal may be a signal in a B8 frequency band, the second signal may be a signal in a B20 frequency band, and the third signal may be a signal in a B28 frequency band. In other words, the radio frequency circuit provided in this embodiment of this application may implement ENDC of B8+N20 (or B20+N8) and ENDC of B20+N28 (or B28+N20) through the two low-frequency antennas: the first antenna and the second antenna.

It should be noted that, the radio frequency circuit provided in this embodiment of this application theoretically may also implement ENDC of B8+N28 (or B28+N8) through the first antenna and the second antenna. However, in an actual application, a bandwidth of B8+N28 is 257 MHz. This bandwidth has a very high requirement on a bandwidth of an antenna, and is difficult to be implemented. Therefore, the radio frequency circuit provided in this embodiment of this application is mainly configured to implement ENDC of B8+N20 (or B20+N8) and ENDC of B20+N28 (or B28+N20) through the first antenna and the second antenna. When the first antenna and the second antenna meet the requirement, ENDC of B8+N28 (or B28+N8) may also be implemented.

It should be understood that, descriptions herein are merely examples. The first signal, the second signal, and the third signal may alternatively be signals in other frequency bands, provided that the foregoing relationship is met. This is not specifically limited in this application.

Based on the foregoing descriptions of the first signal, the second signal, the third signal, the first antenna, and the second antenna, a structure and a working principle of the radio frequency circuit provided in this embodiment of this application are specifically described.

FIG. 6 is a schematic diagram of a radio frequency circuit according to an embodiment of this application. As shown in FIG. 6, the radio frequency circuit includes a first transceiver link 601, a second transceiver link 602, a third transceiver link 603, and a fourth receive link 604. The first transceiver link 601 and the second transceiver link 602 are both connected to a first antenna. The third transceiver link 603 and the fourth receive link 604 are both connected to a second antenna.

In this embodiment of this application, a transceiver link refers to a receive link and a send link.

The first transceiver link 601 is configured to: through the first antenna, transmit a first signal and perform primary receiving of the first signal. To be specific, a send link of the first transceiver link 601 is configured to transmit the first signal through the first antenna, and a receive link of the first transceiver link 601 is configured to perform primary receiving of the first signal through the first antenna.

The second transceiver link 602 is configured to: through the first antenna, transmit a third signal, perform primary receiving of the third signal, and perform diversity receiving of a second signal. To be specific, a send link of the second transceiver link 602 is configured to transmit the third signal through the first antenna, and a receive link of the second transceiver link 602 is configured to perform primary receiving of the third signal and diversity receiving of the second signal through the first antenna.

It should be noted that, in the field of radio frequencies, transmission and primary receiving of a signal need to be completed on a same antenna. Therefore, if the third signal is transmitted through the first antenna, primary receiving needs to be performed through the first antenna.

The third transceiver link 603 is configured to: through the second antenna, transmit the second signal, perform primary receiving of the second signal, and perform diversity receiving of the third signal. To be specific, a send link of the third transceiver link 603 is configured to transmit the second signal through the second antenna, and a receive link of the third transceiver link 603 is configured to perform primary receiving of the second signal and diversity receiving of the third signal through the second antenna.

The fourth receive link 604 is configured to perform diversity receiving of the first signal through the second antenna.

The foregoing is a structure of the radio frequency circuit provided in this embodiment of this application. It can be learned that the radio frequency circuit includes three transceiver links and one receive link. The three transceiver links cooperate with one receive link to implement ENDC of the first signal and the second signal and ENDC of the second signal and the third signal. Details are described below.

When ENDC is performed on the first signal and the second signal, the first transceiver link transmits the first signal and performs primary receiving of the first signal through the first antenna, the second transceiver link performs diversity receiving of the second signal through the first antenna, the third transceiver link transmits the second signal and performs primary receiving of the second signal through the second antenna, and the fourth receive link performs diversity receiving of the first signal through the second antenna.

When ENDC is performed on the second signal and the third signal, through the first antenna, the second transceiver link transmits the third signal, performs primary receiving of the third signal, and performs diversity receiving of the second signal, and through the second antenna, the third transceiver link transmits the second signal, performs primary receiving of the second signal, and performs diversity receiving of the third signal.

In addition, according to the radio frequency circuit provided in this embodiment of this application, when frequencies of the uplink signal of the first signal and the uplink signal of the second signal are close, mutual interference between transmission of the two signals on a same antenna can be avoided. This help improve transmission efficiency of the antenna. For example, a relationship of the first signal, the second signal, and the third signal is shown in FIG. 5. In other words, the uplink frequency band of the first signal is close to the uplink frequency band of the second signal. In this case, the uplink signal of the first signal and the uplink signal of the second signal that are transmitted on the same antenna may interfere with each other, affecting transmission efficiency. Therefore, in this embodiment of this application, when ENDC is performed on the first signal and the second signal, the uplink signal of the first signal is transmitted through the first antenna, and the uplink signal of the second antenna is transmitted through the second antenna, and the two signals do not interfere with each other, so that a risk of sensitivity degradation caused by intermodulation can be reduced, and a risk of transmission spurs can be reduced.

For example, the first signal is a signal in a B8 frequency band, and the second signal is a signal in a B20 frequency band. When ENDC is performed on B8+N20 (or B20+N8), an uplink signal of B8 and an uplink signal of B20 are very close to each other with a difference of only 18 MHz, and may interfere with each other when transmitted through a same antenna. For example, a third-order intermodulation component of B20 and B8 affects receiving of B8. Therefore, in this embodiment of this application, transmission of a B8TX signal and primary receiving of a B8RX signal are performed through the first transceiver link and the first antenna. Diversity receiving of a B20RX signal is performed through the second transceiver link and the first antenna. Transmission of a B20TX signal and primary receiving of the B20RX signal are performed through the third transceiver link and the second antenna. Diversity receiving of the B8RX signal is performed through the fourth receive link. In this way, mutual interference between the B8TX signal and the B20TX signal can be avoided, and ENDC of B8+N20 (or B20+N8) can be implemented.

It can be learned from the foregoing descriptions that, the radio frequency circuit provided in this embodiment of this application can implement ENDC of at least two low-frequency combinations through two low-frequency antennas, can effectively avoid a problem that receiving sensitivity is affected by intermodulation between transmitted signals of low-frequency signals, and has very high practicality. Specific implementations of the radio frequency circuit are described below.

In this embodiment of this application, the transceiver link may include a duplexer, and the receive link may include a filter. For explanations of the duplexer and the filter, refer to the foregoing concept or term explanations. Details are not described herein again.

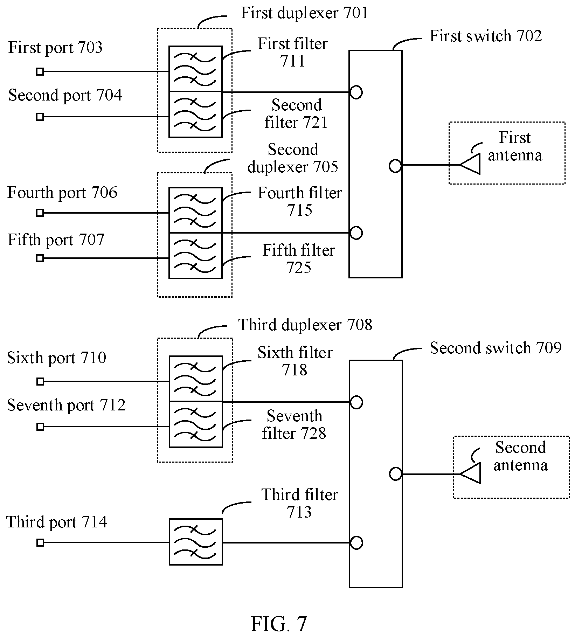

FIG. 7 is a schematic diagram of another radio frequency circuit according to an embodiment of this application.

As shown in FIG. 7, a first transceiver link of the radio frequency circuit includes a first duplexer 701 and a first switch 702. The first switch 702 is connected to a first antenna. The first duplexer 701 is configured to filter an uplink signal and a downlink signal of a first signal. The first duplexer 701 includes a first filter 711 and a second filter 721. A passband of the first filter 711 is an uplink frequency band of the first signal. A passband of the second filter 721 is a downlink frequency band of the first signal. A common port of the first filter 711 and the second filter 721 is connected to the first switch 702. The first filter 711 is further connected to a first port 703. The second filter 721 is further connected to a second port 704. The first port 703 is an output port of the first signal, and the second port 704 is a primary receiving port of the first signal.

A second transceiver link of the radio frequency circuit shares the first switch 702 with the first transceiver link. The second transceiver link further includes a second duplexer 705. The second duplexer 705 is configured to filter an uplink signal of a third signal, a downlink signal of the third signal, and a downlink signal of a second signal. The second duplexer 705 includes a fourth filter 715 and a fifth filter 725. A passband of the fourth filter 715 is an uplink frequency band of the third signal. A passband of the fifth filter 725 is a downlink frequency band of the third signal and a downlink frequency band of the second signal. A common port of the fourth filter 715 and the fifth filter 725 is connected to the first switch 702. The fourth filter 715 is further connected to a fourth port 706. The fifth filter 725 is further connected to a fifth port 707. The fourth port 706 is an output port of the third signal, and the fifth port 707 is a primary receiving port of the third signal and a diversity receiving port of the second signal.

A third transceiver link of the radio frequency circuit includes a third duplexer 708 and a second switch 709. The second switch 709 is connected to a second antenna. The third duplexer 708 is configured to filter an uplink signal of the second signal, the downlink signal of the second signal, and the downlink signal of the third signal. The third duplexer 708 includes a sixth filter 718 and a seventh filter 728. A passband of the sixth filter 718 is an uplink frequency band of the second signal. A passband of the seventh filter 728 is the downlink frequency band of the second signal and the downlink frequency band of the third signal. A common port of the sixth filter 718 and the seventh filter 728 is connected to the second switch 709. The sixth filter 718 is further connected to a sixth port 710. The seventh filter 728 is further connected to a seventh port 712. The sixth port 710 is an output port of the second signal, and the seventh port 712 is a primary receiving port of the second signal and a diversity receiving port of the third signal.

A fourth receive link of the radio frequency circuit shares the second switch 709 with the third transceiver link. The fourth receive link further includes a third filter 713. A passband of the third filter 713 is the downlink frequency band of the third signal. The third filter 713 is separately connected to the second switch 709 and a third port 714. The third port 714 is a diversity receiving port of the third signal.

The foregoing is a specific structure of the radio frequency circuit provided in this embodiment of this application. A working principle of the circuit is described below based on the foregoing descriptions of the structure of the circuit.

A working principle of the circuit when ENDC is performed on the first signal and the second signal is described first.

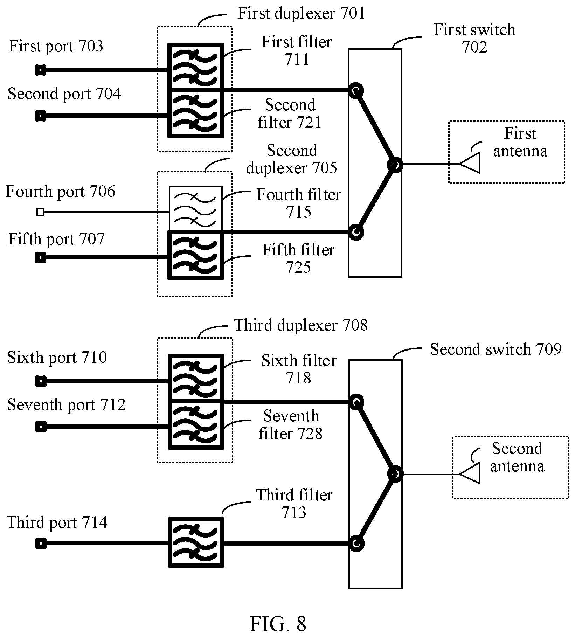

FIG. 8 is a schematic working diagram of the radio frequency circuit according to an embodiment of this application. As shown in FIG. 8, when ENDC is performed on the first signal and the second signal, the first switch 702 connects the first duplexer 701 to the first antenna, and connects the second duplexer 705 to the first antenna. The second switch 709 connects the third duplexer 708 to the second antenna, and connects the third filter 713 to the second antenna.

A transmit path of the uplink signal of the first signal is: the first port 703, the first filter 711, the first switch 702, and the first antenna.

A primary receiving path of the downlink signal of the first signal is: the first antenna, the first switch 702, the second filter 721, and the second port 704. It can be learned that transmission and primary receiving of the first signal are completed through the same antenna.

A diversity receiving path of the downlink signal of the first signal is: the second antenna, the second switch 709, the third filter 713, and the third port 714.

A transmit path of the uplink signal of the second signal is: the sixth port 710, the sixth filter 718, the second switch 709, and the second antenna. In other words, transmission of the first signal and transmission of the second signal are completed through different antennas and do not interfere with each other. This can reduce intermodulation and spur risks.

A primary receiving path of the downlink signal of the second signal is: the second antenna, the second switch 709, the seventh filter 728, and the seventh port 712. It can be learned that both a transmit path and a primary receiving path of the second signal are completed through the same antenna.

A diversity receiving path of the downlink signal of the second signal is: the first antenna, the first switch 702, the fifth filter 725, and the fifth port 707.

At the first switch 702, the first duplexer 701 and the second duplexer 705 may be double turned on, and simultaneously work. At the second switch 709, the third duplexer 708 and the third filter 713 may be double turned on, and simultaneously work.

In this way, ENDC of the first signal and the second signal is implemented.

The example in which the first signal is a signal in a B8 frequency band and the second signal is a signal in an N20 frequency band is used for description again. The same is true when the first signal is a signal in an N8 frequency band and the second signal is a signal in a B20 frequency band. Details are not described herein again.

When the first signal is a signal in the B8 frequency band, and the second signal is a signal in the N20 frequency band, bandwidths of the first antenna and the second antenna need to cover the B8 and N20 frequency bands.

The first port 703 is configured to output a B8TX signal, and a passband of the first filter 711 is B8TX. The second port 704 is configured to perform primary receiving of a B8RX signal, and a passband of the second filter 721 is B8RX. The fifth port 707 is configured to perform diversity receiving of an N20RX signal and primary receiving of the downlink signal of the third signal, and a passband of the fifth filter 725 are N20RX and the downlink frequency band of the third signal. The sixth port 710 is configured to output an N20TX signal, and a passband of the sixth filter 718 is N20TX. The seventh port 712 is configured to perform primary receiving of N20RX and diversity receiving of the downlink signal of the third signal, and a passband of the seventh filter 728 is N20RX and the downlink frequency band of the third signal. The third port 714 is configured to perform diversity receiving of the B8RX signal, and a passband of the third filter 713 is B8RX.

An important reason why the radio frequency circuits shown in FIG. 2 and FIG. 3 do not support ENDC of B8+N20 is that double turning-on of the B8TX filter and the N20TX filter affects in-band performance of the filters, and affects normal working of the radio frequency circuits. In the radio frequency module provided in this embodiment of this application, a transceiver link of B8TX and a transceiver link of the N20TX signal are connected to different antennas through different switches. In other words, transmission of the B8TX signal and transmission of the N20TX signal are implemented through different switches. In addition to avoiding intermodulation and spur risks caused by interference between the TX signals, during double turning-on, performance optimization of N20TX may be ignored, and B8TX, B8RX, N20, and the downlink RX frequency band of the third signal are mainly optimized. In other words, performance of the fourth filter 715 is ignored, and performance of the first filter 711, the second filter 721, and the fifth filter 725 are mainly optimized. Double turning-on of the B8TX filter and the N20TX filter is avoided, which helps improve signal transmission efficiency.

The following describes a working principle of the circuit when ENDC is performed on the second signal and the third signal.

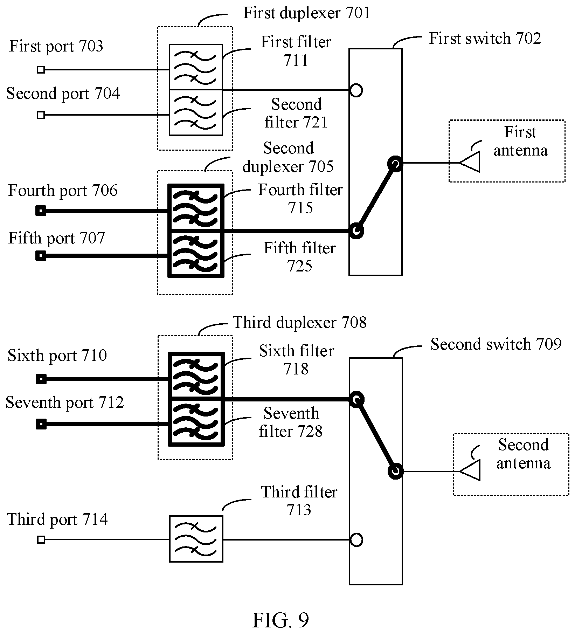

FIG. 9 is another schematic working diagram of the radio frequency circuit according to an embodiment of this application. As shown in FIG. 9, when ENDC is performed on the second signal and the third signal, the first switch 702 connects the second duplexer 705 to the first antenna, and the second switch 709 connects the third duplexer 708 to the second antenna.

A transmit path of the uplink signal of the second signal is: the sixth port 710, the sixth filter 718, the second switch 709, and the second antenna. In other words, transmission of the first signal and transmission of the second signal are completed through different antennas and do not interfere with each other. This helps improve transmission efficiency.

A primary receiving path of the downlink signal of the second signal is: the second antenna, the second switch 709, the seventh filter 728, and the seventh port 712. It can be learned that both a transmit path and a primary receiving path of the second signal are completed through the same antenna.

A diversity receiving path of the downlink signal of the second signal is: the first antenna, the first switch 702, the fifth filter 725, and the fifth port 707.

A transmit path of the uplink signal of the third signal is: the fourth port 706, the fourth filter 715, the first switch 702, and the first antenna.

A primary receiving path of the downlink signal of the third signal is: the first antenna, the first switch 702, the fifth filter 725, and the fifth port 707. It can be learned that transmission and primary receiving of the third signal are completed through the same antenna.

A diversity receiving path of the downlink signal of the third signal is: the second antenna, the second switch 709, the seventh filter 728, and the seventh port 712.

In this way, ENDC of the second signal and the third signal is implemented.

The example in which the second signal is a signal in a B20 frequency band and the third signal is a signal in an N28 frequency band is used for description again. The same is true when the second signal is a signal in an N20 frequency band and the third signal is a signal in a B28 frequency band. Details are not described herein again.

When the second signal is a signal in the B20 frequency band, and the third signal is a signal in the N28 frequency band, bandwidths of the first antenna and the second antenna need to cover the B20 and N28 frequency bands.

The fourth port 706 is configured to output an N28TX signal, and a passband of the fourth filter 715 is N28TX. The fifth port 707 is configured to perform primary receiving of an N28RX signal and diversity receiving of a B20RX signal, and a passband of the fifth filter 725 are N28RX and B20RX. The sixth port 710 is configured to output an B20TX signal, and a passband of the sixth filter 718 is B20TX. The seventh port 712 is configured to perform primary receiving of B20RX and diversity receiving of N28RX, and a passband of the seventh filter 728 are B20RX and N28RX.

The radio frequency circuit provided in this embodiment of this application theoretically can also implement ENDC of the first signal and the third signal on the premise that the antenna meets a requirement. That the antenna meets a requirement means that a bandwidth of the antenna can cover the first signal and the third signal.

The following describes a working principle of the circuit when ENDC is performed on the first signal and the third signal.

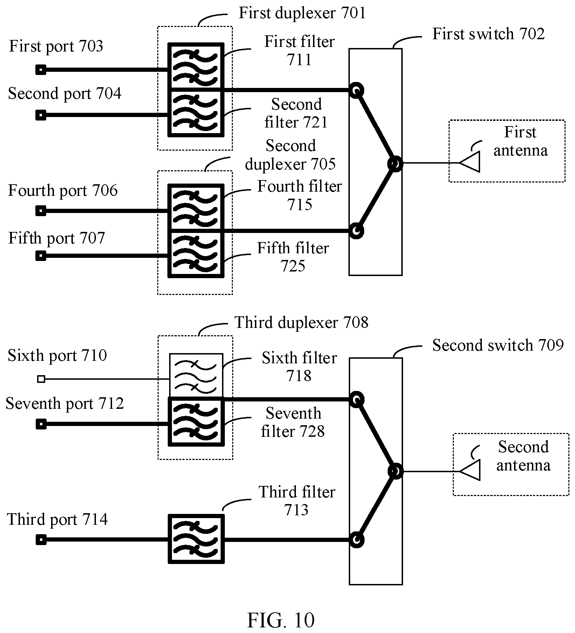

FIG. 10 is another schematic working diagram of the radio frequency circuit according to an embodiment of this application. As shown in FIG. 10, when ENDC is performed on the first signal and the third signal, the first switch 702 connects the first duplexer 701 to the first antenna, and connects the second duplexer 705 to the first antenna. The second switch 709 connects the third duplexer 708 to the second antenna, and connects the third filter 713 to the second antenna.

A transmit path of the uplink signal of the first signal is: the first port 703, the first filter 711, the first switch 702, and the first antenna.

A primary receiving path of the downlink signal of the first signal is: the first antenna, the first switch 702, the second filter 721, and the second port 704. It can be learned that transmission and primary receiving of the first signal are completed through the same antenna.

A diversity receiving path of the downlink signal of the first signal is: the second antenna, the second switch 709, the third filter 713, and the third port 714.

A transmit path of the uplink signal of the third signal is: the fourth port 706, the fourth filter 715, the first switch 702, and the first antenna.

A primary receiving path of the downlink signal of the third signal is: the first antenna, the first switch 702, the fifth filter 725, and the fifth port 707. It can be learned that transmission and primary receiving of the third signal are completed through the same antenna.

A diversity receiving path of the downlink signal of the third signal is: the second antenna, the second switch 709, the seventh filter 728, and the seventh port 712.

In this way, ENDC of the first signal and the third signal is implemented.

It is described herein again that the premise that the radio frequency module provided in this embodiment of this application can implement two types of low-frequency ENDC is that a bandwidth of a low-frequency antenna can cover the two types of low-frequency bands.

The foregoing is the working principle that the radio frequency circuit provided in this embodiment of this application implements ENDC of at least two low-frequency combinations through two low-frequency antennas. In an actual application, a low frequency further includes frequency bands such as B5 and B26. On the premise that a condition is met, a transceiver link of these low-frequency signals may also be disposed in the radio frequency circuit provided in this embodiment of this application. This is described below.

In this embodiment of this application, a low-frequency signal corresponding to a newly added transceiver link may be referred to as a fourth signal. The fourth signal does not overlap the third signal. In this way, ENDC of the fourth signal and the third signal may be implemented. For example, the first signal may be a signal in a B8 frequency band, the second signal may be a signal in a B20 frequency band, the third signal may be a signal in a B28 frequency band, and the fourth signal may be a signal in a B5 or B26 frequency band.

It should be understood that, descriptions herein are merely examples. The first signal, the second signal, the third signal, and the fourth signal may alternatively be signals in other frequency bands, provided that the relationship between the signals is met. This is not specifically limited in this application.

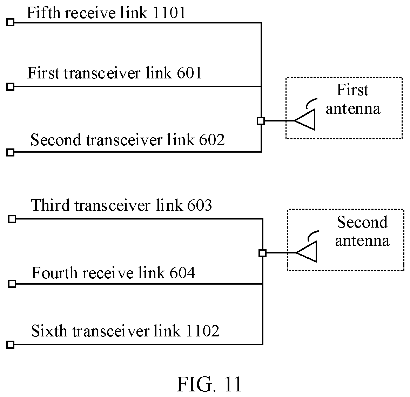

FIG. 11 is a schematic diagram of another radio frequency circuit according to an embodiment of this application. As shown in FIG. 11, the radio frequency circuit is further added with a fifth receive link 1101 and a sixth transceiver link 1102 based on the radio frequency circuit shown in FIG. 6. The fifth receive link 1101 is connected to the first antenna. The sixth transceiver link 1102 is connected to the second antenna. The fifth receive link 1101 is configured to perform diversity receiving of the fourth signal through the first antenna. The sixth transceiver link 1102 is configured to: through the second antenna, transmit the fourth signal and perform primary receiving of the fourth signal.

When ENDC is performed on the third signal and the fourth signal, the second transceiver link 602 transmits the third signal and performs primary receiving of the third signal through the first antenna. The third transceiver link 603 performs diversity receiving of the third signal through the second antenna.

It should be understood that when the fourth signal does not overlap the first signal, and the bandwidths of the first antenna and the second antenna can cover the first signal and the fourth signal, the radio frequency circuit may also implement ENDC of the first signal and the fourth signal. When the fourth signal does not overlap the second signal, and the bandwidths of the first antenna and the second antenna can cover the second signal and the fourth signal, the radio frequency circuit may also implement ENDC of the second signal and the fourth signal. Details are not described herein again.

The following describes a specific implementation of the radio frequency circuit shown in FIG. 11.

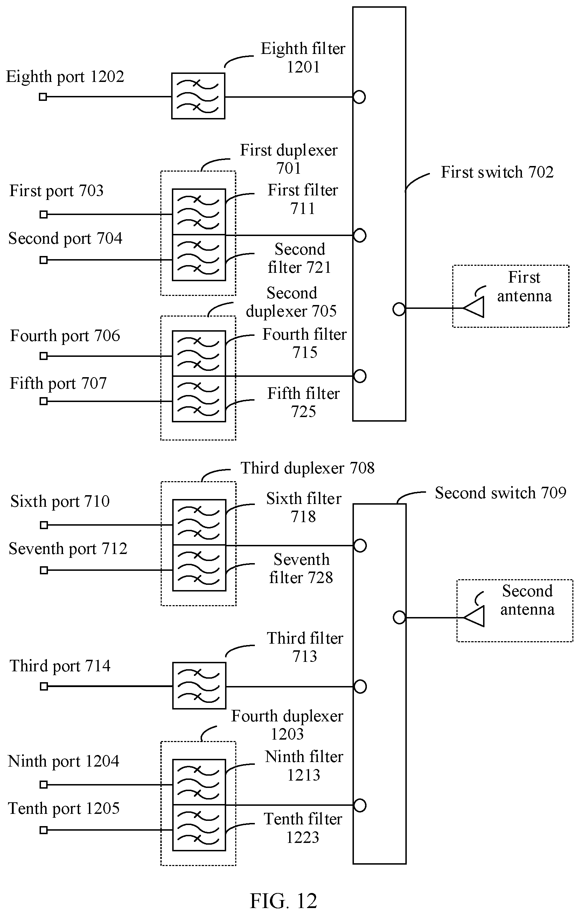

FIG. 12 is a schematic diagram of another radio frequency circuit according to an embodiment of this application. As shown in FIG. 12, the fifth receive link includes an eighth filter 1201 and the first switch 702. The eighth filter 1201 is separately connected to the first switch 702 and an eighth port 1202. A passband of the eighth filter 1201 is a downlink frequency band of the fourth signal. The eighth port 1202 is a diversity receiving port of the fourth signal.

The sixth transceiver link of the radio frequency circuit includes a fourth duplexer 1203 and the second switch 709. The fourth duplexer 1203 is configured to filter an uplink signal of the fourth signal and a downlink signal of the fourth signal. The fourth duplexer 1203 includes a ninth filter 1213 and a tenth filter 1223. A passband of the ninth filter 1213 is an uplink frequency band of the fourth signal. A passband of the tenth filter 1223 is the downlink frequency band of the fourth signal. A common port of the ninth filter 1213 and the tenth filter 1223 is connected to the second switch 709. The ninth filter 1213 is further connected to a ninth port 1204. The tenth filter 1223 is further connected to a tenth port 1205. The ninth port 1204 is an output port of the fourth signal, and the tenth port 1205 is a primary receiving port of the fourth signal.

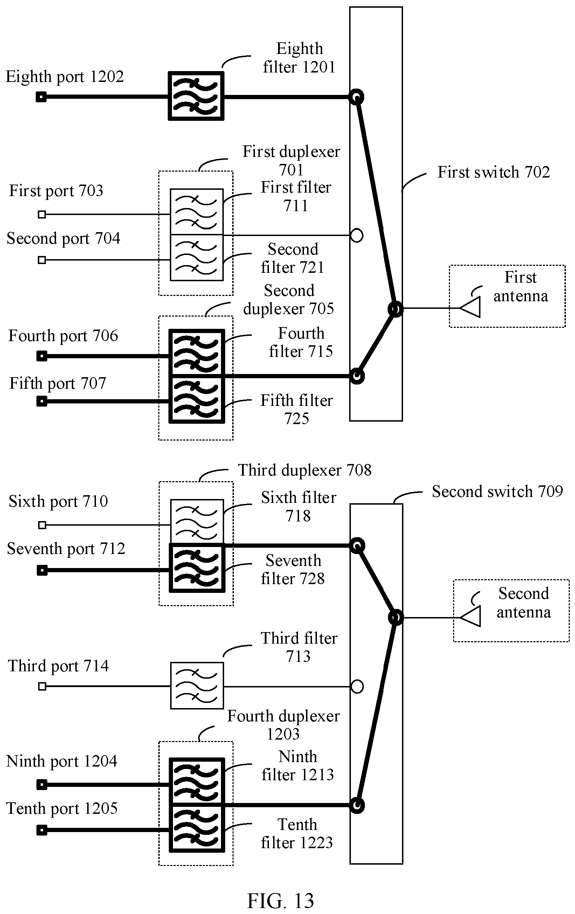

FIG. 13 is a schematic working diagram of the another radio frequency circuit according to an embodiment of this application. As shown in FIG. 13, when ENDC is performed on the third signal and the fourth signal, the first switch 702 connects the second duplexer 705 and the eighth filter 1201 to the first antenna, and the second switch 709 connects the third duplexer 708 and the fourth duplexer 1203 to the second antenna.

A transmit path of the uplink signal of the third signal is: the fourth port 706, the fourth filter 715, the first switch 702, and the first antenna.

A primary receiving path of the downlink signal of the third signal is: the first antenna, the first switch 702, the fifth filter 725, and the fifth port 707. It can be learned that transmission and primary receiving of the third signal are completed through the same antenna.

A diversity receiving path of the downlink signal of the third signal is: the second antenna, the second switch 709, the seventh filter 728, and the seventh port 712.

A transmit path of the uplink signal of the fourth signal is: the ninth port 1204, the ninth filter 1213, the second switch 709, and the second antenna.

A primary receiving path of the downlink signal of the fourth signal is: the second antenna, the second switch 709, the tenth filter 1223, and the tenth port 1205.

A diversity receiving path of the downlink signal of the fourth signal is: the first antenna, the first switch 702, the eighth filter 1201, and the eighth port 1202.

In this way, ENDC of the third signal and the fourth signal may be implemented.

The example in which the third signal is a signal in a B28 frequency band and the fourth signal is a signal in an N5 frequency band is used for description again. The same is true when the third signal is a signal in an N28 frequency band and the fourth signal is a signal in a B5 frequency band. Details are not described herein again.

When the third signal is a signal in the B28 frequency band, and the fourth signal is a signal in the N5 frequency band, bandwidths of the first antenna and the second antenna need to cover the B28 and N5 frequency bands.

The fourth port 706 is configured to output an B28TX signal, and a passband of the fourth filter 715 is B28TX. The fifth port 707 is configured to perform primary receiving of a B28RX signal, and a passband of the fifth filter 725 is B28RX. The seventh port 712 is configured to perform diversity receiving of B28RX, and a passband of the seventh filter 728 is B28RX. The ninth port 1204 is configured to output an N5TX signal, and a passband of the ninth filter 1213 is N5TX. The tenth port 1205 is configured to perform primary receiving of a N5RX signal, and a passband of the tenth filter 1223 is N5RX. The eighth port 1202 is configured to perform diversity receiving of the N5RX signal, and a passband of the eighth filter 1201 is N5RX.

The same is true when the fourth signal is a B26 signal or an N26 signal, and details are not described herein again.

It should be noted that, the radio frequency module provided in this embodiment of this application may further include another low-frequency transceiver link. In other words, there may be a plurality of fifth receive links and sixth transceiver links, which are transceiver links separately corresponding to different low frequencies, so that the radio frequency circuit provided in this embodiment of this application supports ENDC of a plurality of low-frequency combinations.

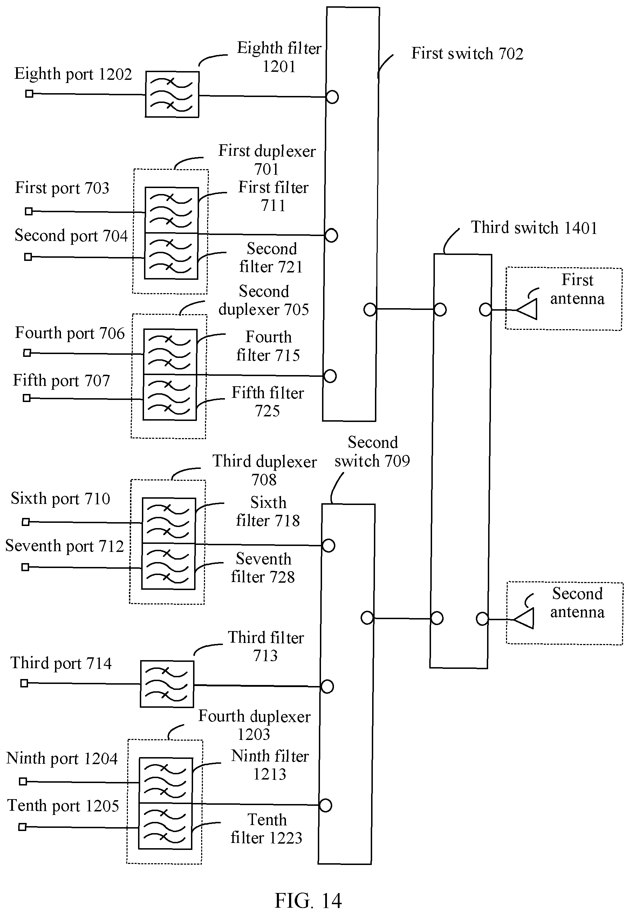

In addition, in some possible designs, a connection relationship between the first switch, the second switch, the first antenna, and the second antenna may be adjustable. FIG. 14 is a schematic diagram of another radio frequency circuit according to an embodiment of this application. As shown in FIG. 14, based on the radio frequency circuit shown in FIG. 12, the radio frequency circuit further includes a fourth switch 1401. The first switch 702 and the second switch 709 are both connected to the first antenna and the second antenna through the fourth switch 1401.

The fourth switch 1401 may connect the first switch 702 to the first antenna, and connect the second switch 709 to the second antenna. Alternatively, the first switch 702 may be connected to the second antenna, and the second switch 709 may be connected to the first antenna. In this way, a radio frequency path may be conveniently connected to different antennas as required, and applicability is good.

The radio frequency circuit provided in this embodiment of this application is described above. An embodiment of this application further provides a radio frequency module, including the radio frequency circuit described in any one of the foregoing embodiments. Details are described below.

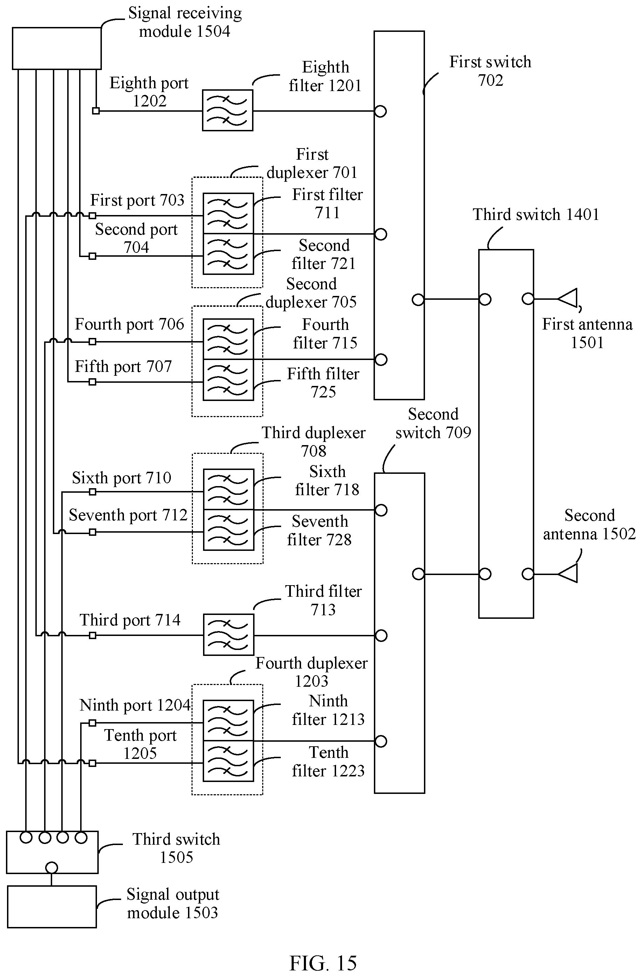

FIG. 15 is a schematic diagram of a radio frequency module according to an embodiment of this application. As shown in FIG. 15, the radio frequency module includes: the radio frequency circuit according to any one of the foregoing embodiments (the radio frequency circuit in FIG. 15 is the radio frequency circuit shown in FIG. 14), a first antenna 1501, a second antenna 1502, a signal output module 1503, a signal receiving module 1504, and a third switch 1505. The signal output module 1503 is connected to the radio frequency circuit through the third switch. The signal output module 1503 is separately connected to the first port 703, the fourth port 706, the sixth port 710, and the ninth port 1204. The signal output module is configured to output a low-frequency signal, where the low-frequency signal includes at least a first signal, a second signal, a third signal, and a fourth signal. The signal receiving module is separately connected to the second port 704, the fifth port 707, the seventh port 712, the third port 714, the eighth port 1202, and the tenth port 1205. The signal receiving module is configured to receive the low-frequency signal.

The signal output module 1503 may include components such as a low-frequency signal source and a power amplifier. A low-frequency signal is output by the signal source, amplified by a corresponding power amplifier, and then input to the first port 703, the fourth port 706, the sixth port 710, the ninth port 1204, and the like.

The signal receiving module may include components such as a low noise amplifier. Signals received by the second port 704, the fifth port 707, the seventh port 712, the third port 714, the eighth port 1202, the tenth port 1205, and the like may be received by corresponding low noise amplifiers.

The radio frequency module may implement ENDC of at least two low-frequency combinations. Example descriptions are provided below.

When ENDC is performed on the first signal and the second signal, the third switch 1505 may connect the signal output module 1503 to the first port 703 and the sixth port 710, and disconnect a connection between the signal output module and another port.

When ENDC is performed on the second signal and the third signal, the third switch may connect the signal output module 1503 to the fourth port 706 and the sixth port 710, and disconnect a connection between the signal output module and another port.

When ENDC is performed on the third signal and the fourth signal, the third switch may connect the signal output module 1503 to the fourth port 706 and the ninth port 1204, and disconnect a connection between the signal output module and another port.

ENDC of another combination is similar to this, and details are not described herein again.

It may be understood based on the foregoing descriptions that, the radio frequency circuit and the radio frequency module provided in embodiments of this application can implement ENDC of at least two low-frequency combinations through two low-frequency antennas, and have very high practicality.

An embodiment of this application further provides an electronic device. The electronic device may include the radio frequency circuit or the radio frequency module described in any one of the foregoing embodiments.

Although the radio frequency circuit and the radio frequency module provided in this application are described with reference to specific features and embodiments thereof, it is clear that various modifications and combinations may be further made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clearly that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A radio frequency circuit, comprising a first transceiver link, a second transceiver link, a third transceiver link, and a fourth receive link, wherein
the first transceiver link and the second transceiver link are both connected to a first antenna; the third transceiver link and the fourth receive link are both connected to a second antenna; the first antenna and the second antenna are both low-frequency antennas;
the first transceiver link is configured to: through the first antenna, transmit a first signal and perform primary receiving of the first signal; the second transceiver link is configured to: through the first antenna, transmit a third signal, perform primary receiving of the third signal, and perform diversity receiving of a second signal; the first signal, the second signal, and the third signal are all low-frequency signals; only a downlink frequency band of the second signal overlaps the third signal, and overlaps a downlink frequency band of the third signal; the first signal does not overlap the second signal and the third signal; and a distance between an uplink frequency band of the first signal and an uplink frequency band of the second signal is less than a distance between the uplink frequency band of the first signal and an uplink frequency band of the third signal;
the third transceiver link is configured to: through the second antenna, transmit the second signal, perform primary receiving of the second signal, and perform diversity receiving of the third signal; and
the fourth receive link is configured to perform diversity receiving of the first signal through the second antenna.

2. The radio frequency circuit according to claim 1, wherein the first transceiver link comprises a first duplexer and a first switch; and the first duplexer is configured to filter an uplink signal and a downlink signal of the first signal, wherein the uplink signal of the first signal is a signal in the uplink frequency band of the first signal, and the downlink signal of the first signal is a signal in a downlink frequency band of the first signal;
the first duplexer is separately connected to a first port, a second port, and the first switch; the first switch is connected to the first antenna; and the first port is an output port of the first signal, and the second port is a primary receiving port of the first signal; and
when the first switch connects the first duplexer to the first antenna, the uplink signal of the first signal is output from the first port and transmitted through the first antenna after sequentially passing through the first duplexer and the first switch, and after being received by the first antenna, the downlink signal of the first signal sequentially passes through the first switch and the first duplexer, and the second port completes primary receiving.

3. The radio frequency circuit according to claim 2, wherein the first duplexer comprises a first filter and a second filter;
a common port of the first filter and the second filter is connected to the first switch, the first filter is further connected to the first port, and the second filter is further connected to the second port;
a passband of the first filter is the uplink frequency band of the first signal, and a passband of the second filter is the downlink frequency band of the first signal; and
when the first switch connects the first duplexer to the first antenna, the uplink signal of the first signal is output from the first port and transmitted through the first antenna after sequentially passing through the first filter and the first switch, and after being received by the first antenna, the downlink signal of the first signal sequentially passes through the first switch and the second filter, and the second port completes primary receiving.

4. The radio frequency circuit according to claim 1, wherein the fourth receive link comprises a third filter and a second switch;
the third filter is separately connected to the second switch and a third port, the second switch is connected to the second antenna, and the third port is a diversity receiving port of the third signal;
a passband of the third filter is the downlink frequency band of the third signal; and
when the second switch connects the third filter to the second antenna, after being received by the second antenna, a downlink signal of the third signal sequentially passes through the second switch and the third filter, and the third port completes diversity receiving; and the downlink signal of the third signal is a signal in the downlink frequency band of the third signal.

5. The radio frequency circuit according to claim 1, wherein the second transceiver link comprises a second duplexer and a first switch; and the second duplexer is configured to filter an uplink signal of the third signal, a downlink signal of the third signal, and a downlink signal of the second signal, wherein the uplink signal of the third signal is a signal in the uplink frequency band of the third signal, the downlink signal of the third signal is a signal in the downlink frequency band of the third signal, and the downlink signal of the second signal is a signal in the downlink frequency band of the second signal;
the second duplexer is separately connected to a fourth port, a fifth port, and the first switch, the first switch is connected to the first antenna, the fourth port is an output port of the third signal, and the fifth port is a primary receiving port of the third signal and a diversity receiving port of the second signal; and
when the first switch connects the second duplexer to the first antenna, the uplink signal of the third signal is output from the fourth port and transmitted through the first antenna after sequentially passing through the second duplexer and the first switch; after being received by the first antenna, the downlink signal of the third signal sequentially passes through the first switch and the second duplexer, and the fifth port completes primary receiving; and after being received by the first antenna, the downlink signal of the second signal sequentially passes through the first switch and the second duplexer, and the fifth port completes diversity receiving.

6. The radio frequency circuit according to claim 5, wherein the second duplexer comprises a fourth filter and a fifth filter;
a common port of the fourth filter and the fifth filter is connected to the first switch, the fourth filter is further connected to the fourth port, and the fifth filter is further connected to the fifth port;
a passband of the fourth filter is the uplink frequency band of the third signal, and a passband of the fifth filter is the downlink frequency band of the third signal and the downlink frequency band of the second signal; and
when the first switch connects the second duplexer to the first antenna, the uplink signal of the third signal is output from the fourth port and transmitted through the first antenna after sequentially passing through the fourth filter and the first switch; after being received by the first antenna, the downlink signal of the third signal sequentially passes through the first switch and the fifth filter, and the fifth port completes primary receiving; and after being received by the first antenna, the downlink signal of the second signal sequentially passes through the first switch and the fifth filter, and the fifth port completes diversity receiving.

7. The radio frequency circuit according to claim 1, wherein the third transceiver link comprises a third duplexer and a second switch; and the third duplexer is configured to filter an uplink signal of the second signal, a downlink signal of the second signal, and a downlink signal of the third signal, wherein the uplink signal of the second signal is a signal in the uplink frequency band of the second signal, the downlink signal of the second signal is a signal in the downlink frequency band of the second signal, and the downlink signal of the third signal is a signal in the downlink frequency band of the third signal;
the third duplexer is separately connected to a sixth port, a seventh port, and the second switch, the second switch is connected to the second antenna, and the sixth port is an output port of the second signal, and the seventh port is a primary receiving port of the second signal and a diversity receiving port of the third signal; and
when the second switch connects the third duplexer to the second antenna, the uplink signal of the second signal is output from the sixth port and transmitted through the second antenna after sequentially passing through the third duplexer and the second switch; after being received by the second antenna, the downlink signal of the second signal sequentially passes through the second switch and the third duplexer, and the seventh port completes primary receiving; and after being received by the second antenna, the downlink signal of the third signal sequentially passes through the second switch and the third duplexer, and the seventh port completes diversity receiving.

8. The radio frequency circuit according to claim 7, wherein the third duplexer comprises a sixth filter and a seventh filter;
a common port of the sixth filter and the seventh filter is connected to the second switch, the sixth filter is further connected to the sixth port, and the seventh filter is further connected to the seventh port;
a passband of the sixth filter is the uplink frequency band of the second signal, and
a passband of the seventh filter is the downlink frequency band of the second signal and the downlink frequency band of the third signal; and
when the second switch connects the third duplexer to the second antenna, the uplink signal of the second signal is output from the sixth port and transmitted through the second antenna after sequentially passing through the sixth filter and the second switch; after being received by the second antenna, the downlink signal of the second signal sequentially passes through the second switch and the seventh filter, and the seventh port completes primary receiving; and after being received by the second antenna, the downlink signal of the third signal sequentially passes through the second switch and the seventh filter, and the seventh port completes diversity receiving.

9. The radio frequency circuit according to claim 1, wherein when ENDC is performed on the first signal and the second signal, the first transceiver link, the second transceiver link, the third transceiver link, and the fourth receive link are all connected; and when ENDC is performed on the second signal and the third signal, the second transceiver link and the third transceiver link are connected, and the first transceiver link and the fourth receive link are disconnected.

10. The radio frequency circuit according to claim 1, wherein the radio frequency circuit further comprises a fifth receive link and a sixth transceiver link;
the fifth receive link is connected to the first antenna, and the sixth transceiver link is connected to the second antenna; and
the fifth receive link is configured to perform diversity receiving of a fourth signal through the first antenna; the sixth transceiver link is configured to: through the second antenna, transmit the fourth signal and perform primary receiving of the fourth signal;
and the fourth signal does not overlap the third signal.

11. The radio frequency circuit according to claim 10, wherein the fifth receive link comprises an eighth filter and a first switch;
the eighth filter is separately connected to the first switch and an eighth port, the first switch is further connected to the first antenna, and the eighth port is a diversity receiving port of the fourth signal;
a passband of the eighth filter is a downlink frequency band of the fourth signal; and
when the first switch connects the eighth filter to the first antenna, after being received by the first antenna, a downlink signal of the fourth signal sequentially passes through the first switch and the eighth filter, and the eighth port completes diversity receiving; and the downlink signal of the fourth signal is a signal in the downlink frequency band of the fourth signal.

12. The radio frequency circuit according to claim 10, wherein the sixth transceiver link comprises a fourth duplexer and a second switch; and the fourth duplexer is configured to filter an uplink signal of the fourth signal and a downlink signal of the fourth signal, wherein the uplink signal of the fourth signal is a signal in an uplink frequency band of the fourth signal, and the downlink signal of the fourth signal is a signal in a downlink frequency band of the fourth signal;
the fourth duplexer is separately connected to a ninth port, a tenth port, and the second switch, the second switch is connected to the second antenna, and the ninth port is an output port of the fourth signal, and the tenth port is a primary receiving port of the fourth signal; and
when the second switch connects the fourth duplexer to the second antenna, the uplink signal of the fourth signal is output from the ninth port and transmitted through the second antenna after sequentially passing through the fourth duplexer and the second switch; and the downlink signal of the fourth signal is received by the second antenna, and sequentially passes through the second switch and the fourth duplexer, and the tenth port completes primary receiving.

13. The radio frequency circuit according to claim 12, wherein the fourth duplexer comprises a ninth filter and a tenth filter;
a common port of the ninth filter and the tenth filter is connected to the second switch, the ninth filter is further connected to the ninth port, and the tenth filter is further connected to the tenth port;
a passband of the ninth filter is the uplink frequency band of the fourth signal, and a passband of the tenth filter is the downlink frequency band of the fourth signal; and
when the second switch connects the fourth duplexer to the second antenna, the uplink signal of the fourth signal is output from the ninth port and transmitted through the second antenna after sequentially passing through the ninth filter and the second switch; and the downlink signal of the fourth signal is received by the second antenna, and sequentially passes through the second switch and the tenth filter, and the tenth port completes primary receiving.

14. A radio frequency module, wherein the radio frequency module comprises: the radio frequency circuit according to any one of claims 1 to 13, a first antenna, a second antenna, a signal output module, and a signal receiving module;
the first transceiver link and the second transceiver link in the radio frequency circuit are both connected to the first antenna, and the third transceiver link and the fourth receive link in the radio frequency circuit are both connected to the second antenna;
the signal output module is separately connected to the first transceiver link, the second transceiver link, and the third transceiver link; and the signal output module is configured to output a low-frequency signal, wherein the low-frequency signal comprises at least a first signal, a second signal, and a third signal; and
the signal receiving module is separately connected to the first transceiver link, the second transceiver link, the third transceiver link, and the fourth receive link, and the signal receiving module is configured to receive the low-frequency signal.

15. The radio frequency module according to claim 14, wherein the radio frequency module further comprises a third switch;
the signal output module is connected to the radio frequency circuit through the third switch;
the third switch is configured to: when ENDC is performed on the first signal and the second signal, connect the signal output module to the first transceiver link and the third transceiver link, and disconnect a connection between the signal output module and the second transceiver link; and
the third switch is further configured to: when ENDC is performed on the second signal and the third signal, connect the signal output module to the second transceiver link and the third transceiver link, and disconnect a connection between the signal output module and the first transceiver link.

16. An electronic device, wherein the electronic device comprises the radio frequency circuit according to any one of claims 1 to 13 or the radio frequency module according to claim 14 or 15.
